# EUROPÄISCHE PATENTANMELDUNG

(11) **EP 0 586 003 A2**
(43) Veröffentlichungstag der Anmeldung: **09.03.1994**
(21) Anmeldenummer: 93202450.8
(22) Anmeldetag: 19.08.1993
(51) Int. Cl.: H01B 1/08, C09C 1/00, C01G 19/02, G03G 5/08, G03G 9/097

(54) **Elektrisch leitfähiger Füllstoff und Verfahren zu seiner Herstellung**

(30) Priorität: 05.02.1993 DE 4303385; 04.09.1992 DE 4229218
(71) Anmelder: METALLGESELLSCHAFT AG, D-60323 Frankfurt am Main (DE)
(72) Erfinder: Wedler, Michael, Dr., D-47119 Duisburg (DE); Hocken, Jörg, Dr., D-49670 Meerbusch (DE); Rosin, Uwe, D-47475 Kamp-Lintfort (DE); Hayashi, Takao, Shimonoseki-shi Yamaguchi-ken (JP)

(57) **Zusammenfassung**

Es wird ein elektrisch leitfähiger Füllstoff beschrieben, bei dem ein anorganischer Grundkörper mit einer Schicht, die aus mit Fluoridionen dotiertem SnO₂ besteht, umhüllt ist, wobei der anorganische Grundkörper aus BaSO₄, TiO₂, Alkalititanat, CaCO₃, SiO₂, Glasfasern, Glimmer, Talkum oder Kaolin besteht und wobei die Schicht mikrokristallin und transparent ist.

## Beschreibung

Die Erfindung betrifft einen elektrisch leitfähigen Füllstoff, die Verwendung des elektrisch leitfähigen Füllstoffs und ein Verfahren zu seiner Herstellung.

Aus der DE-PS 40 17 044 ist ein Füllstoff bekannt, der aus elektrisch leitfähigem Bariumsulfat besteht, wobei BaSO₄-Teilchen von einer Schicht aus mit Sb₂O₃ dotiertem SnO₂ umhüllt sind. Dieser Füllstoff weist den Nachteil auf, daß die Verwendung von Antimonoxid als Dotierungsmaterial aus arbeitsmedizinischen Gründen nicht in allen Anwendungsbereichen unbedenklich ist.

Aus Gmelin's Handbuch der Anorganischen Chemie. Teil C 1, (Zinn) Seite 82, geht die starke Zunahme der elektrischen Leitfähigkeit von Fluoridionen enthaltenden SnO₂-Schichten auf Glasunterlagen hervor.

Aus der DE-OS 4 006 044 ist ein Verfahren zur Herstellung von mit Fluorid dotierten, elektrisch leitfähigen Zinndioxiden sowie die Verwendung von mit Fluorid dotierten, elektrisch leitfähigen Zinndioxiden als Füllstoffe oder Pigmente in Kunststoffen, Lacken usw. bekannt.

Aus EP 0 441 426 A1 sind Tonerpartikel bekannt, die anhaftendes mit Fluorid dotiertes Zinndioxid mit einer Partikelgröße von 0,2 µm enthalten und einen spezifischen elektrischen Widerstand von 10⁵ Ohm · m aufweisen. Der Fluoridgehalt in der mit Fluorid dotierten Zinndioxidschicht beträgt 1 - 10 Gew.-%, vorzugsweise 1 - 5 Gew.-%. Hierbei wird mit Fluorid dotiertes SnO₂ auf Tonerpartikel aufgebracht. Die Tonerpartikel bestehen aus einem thermoplastischen Harz. Die Beschichtung der Tonerpartikel erfolgt, indem die Tonerpartikel bis zum Erweichen ihrer Oberfläche erwärmt und feine SnO₂-Partikel an die erweichte Oberfläche der Tonerpartikel angelagert werden.

Wesentliches Merkmal der bisher beschriebenen Systeme auf Basis von grundkörperfreiem mit Fluorid dotiertem SnO₂ ist, daß die Eigenschaften dieser Stoffe nahezu ausschließlich von SnO₂ bestimmt werden. Diese sind vorrangig eine hohe Dichte von nahezu 7 g/cm³ sowie eine merkliche Lichtstreuung, bedingt durch die Partikelgröße von handelsüblichem SnO₂.

Es ist bisher kein elektrisch leitfähiger Füllstoff bekannt, der einerseits die Vorteile ausgewählter, beispielsweise leichter oder transparenter anorganischer Grundkörper ausnutzt und gleichzeitig die arbeitsmedizinischen Bedenken, die im Umgang mit Antimon bestehen, hinfällig werden läßt.

Der Erfindung liegt die Aufgabe zugrunde, einen elektrisch leitfähigen Füllstoff zu schaffen, der zum einen ein möglichst geringes spezifisches Gewicht - d.h. geringer als reines Zinndioxid aufweist, um die erforderliche Mindestmasse an elektrisch leitfähigem Füllstoff deutlich zu verringern. Zum andern ist es Aufgabe der Erfindung, in solch spezifisch leichten Füllstoffen die elektrische Leitfähigkeit durch eine andere Dotierkomponente als Antimon zu bewirken.

Die der Erfindung zugrundeliegende Aufgabe wird dadurch gelöst, daß ein anorganischer Grundkörper mit einer Schicht, die aus mit Fluoridionen dotiertem SnO₂ besteht, umhüllt ist.

Eine vorteilhafte Ausgestaltung der Erfindung ist, daß der anorganische Grundkörper BaSO₄ ist.

Eine vorteilhafte Ausgestaltung der Erfindung ist, daß der anorganische Grundkörper TiO₂ ist.

Eine vorteilhafte Ausgestaltung der Erfindung ist, daß der anorganische Grundkörper ein Rutilmischphasenpigment aus Nickeltitangelb oder Chromtitangelb ist, oder daß der anorganische Grundkörper nadelförmig ist, bestehend aus Wollastonit, nadelförmigem TiO₂, nadelförmigem Alkalititanat, nadelförmigem CaCO₃, nadelförmigem SiO₂ oder Glasfasern.

Eine vorteilhafte Ausgestaltung der Erfindung ist, daß der anorganische Grundkörper ein plättchenförmiges Partikel, bestehend aus Glimmer, Talkum, Kaolin, oder BaSO₄ ist.

Eine vorteilhafte Ausgestaltung der Erfindung ist, daß die Schicht aus mit Fluoridionen dotiertem SnO₂ eine Stärke von 10 - 30 nm aufweist.

Eine vorteilhafte Ausgestaltung der Erfindung ist, daß die Schicht aus mit Fluoridionen dotiertem SnO₂ eine Stärke von 10 - 15 nm aufweist.

Eine vorteilhafte Ausgestaltung der Erfindung ist, daß die mit Fluoridionen dotierte SnO₂-Schicht aus zusammenhängenden mit Fluorid dotierten SnO₂-Kristalliten mit Kristallitgrößen von 2 - 10 nm aufgebaut ist.

Eine vorteilhafte Ausgestaltung der Erfindung ist, daß die Schicht aus mit Fluoridionen dotiertem SnO₂ transparent ist.

Eine vorteilhafte Ausgestaltung der Erfindung ist, daß die Schicht aus mit Fluoridionen dotiertem SnO₂ einen Fluoridgehalt von 1 bis 10 Gew.-%, bezogen auf die SnO₂-Schicht, hat.

Eine vorteilhafte Ausgestaltung der Erfindung ist, daß die Schicht aus mit Fluoridionen dotiertem SnO₂ einen Fluoridgehalt von 2 bis 4 Gew.-%, bezogen auf die SnO₂-Schicht, hat.

Der elektrisch leitfähige Füllstoff zeichnet sich dadurch aus, daß seine vorteilhaften physikalischen und anwendungstechnischen Eigenschaften durch die gezielte Auswahl des anorganischen Grundkörpers festgelegt sind, während die elektrische Leitfähigkeit durch eine dünne, mikrokristalline, transparente Beschichtung aus Zinndioxid, die mit Fluoridionen dotiert ist, auf der Oberfläche dieses anorganischen Grundkörpers bewerkstelligt wird.

Das bedeutet, daß das beschichtete Partikel nicht in seinem Gesamtvolumen elektrisch leitfähig ist, was im Gegensatz hierzu bei einem grundkörperfreien SnO₂ üblicherweise der Fall ist. Ein BaSO₄-Grundkörper mit einer mittleren Partikelgröße von <0,7 µm erscheint im Verbund mit einer erfindungsgemäßen mit Fluoridionen dotierten SnO₂-Beschichtung in Bindemittelsystemen, z. B. in Lacken, transparent.

Der elektrisch leitfähige Füllstoff gemäß der vorliegenden Erfindung zeichnet sich aus durch sein geringes spezifisches Gewicht, gute Dispergierbarkeit, gegebenenfalls Anisotropie, und gleichzeitig durch gute elektrische Leitfähigkeit aufgrund einer dünnen Zinndioxidschicht, die mit Fluoridionen dotiert ist.

Durch gezielte Auswahl der Partikelgröße des jeweiligen anorganischen Grundkörpers sind auch die jeweils für einen bestimmten Anwendungszweck gewünschten optischen Eigenschaften, z. B., Transparenz oder hohes Deckvermögen des leitfähigen Pigments, im System frei wählbar.

Liegt die mittlere Partikelgröße beispielsweise eines aus BaSO₄ bestehenden Grundkörpers unterhalb von 0,7 µm, daher mit einer ausreichenden Distanz vom Maximum des Streuvermögens von BaSO₄ entfernt, so lassen sich unter Verwendung dieser Partikel bei gleichzeitig guter Dispergierbarkeit elektrisch leitfähige, weitgehend transparente Lackschichten mit einer Schichtdicke von <10 µm herstellen.

Dem erfindungsmäß elektrisch leitfähigen Füllstoff wird von der mit Fluoridionen dotierten SnO₂-Beschichtung bevorzugt die elektrische Leitfähigkeit als Eigenschaft verliehen. Das wird dadurch erreicht, daß das SnO₂ als sehr dünne Schicht, bestehend aus wenige nm großen Einzelkristalliten, die auf dem Wege der Auffällung aus gelösten Sn-Vorstufen auf verschiedene anorganische Grundkörper aufgebracht wurden, der Dotierung mit Fluoridionen unterworfen wird. Die Gesamtpartikel stellen damit im Unterschied zum reinen mit Fluorid dotiertem SnO₂ einen Verbundkörper dar.

Mit den erfindungsgemäß elektrisch leitfähigen Füllstoffen ist die Erzeugung von gefärbten, nicht schwarzen, elektrisch leitfähigen Kunststoffen möglich. Erfindungsgemäße, helle, nadelförmige, elektrisch leitfähige Füllstoffe können besonders vorteilhaft zum Leitfähigmachen von Kunststoffteilen, durch Einarbeitung in die geschmolzene Kunststoffmasse, eingesetzt werden, da zum einen durch die Partikelanisotropie im Vergleich zu sphärischen, leitfähigen Füllstoffpartikeln ein relativ geringer Massenanteil pro Volumeneinheit für den Aufbau des leitfähigen Netzwerkes benötigt wird. Zum anderen übernehmen nadelförmige Füllstoffe in der Polymer-Volumenfüllung bevorzugt Verstärkungsfunktionen.

Erfindungsgemäße plättchenförmige, elektrisch leitfähige Partikel weisen durch ihren Formfaktor gegenüber sphärischen Partikeln Vorteile hinsichtlich des Massenverbrauchs auf, wodurch sie sich besonders für den Einsatz in Schichten von >10 µm eignen.

Durch die erfindungsgemäße Beschichtung der Partikel mit einer mit Fluoridionen dotierten SnO₂-Schicht wurden folgende vorteilhafte Eigenschaften der erfindungemäßen leitfähigen Füllstoffe gefunden, nämlich, eine wesentlich günstigere Dichte des Gesamtpartikels, eine in weitem Rahmen wählbare Teilchenmorphologie, z. B. Nadeln, Plättchen, Kugeln usw., sowie frei wählbare bestimmte optische Eigenschaften. Z. B. ist der Füllstoff im Lacksystem nahezu transparent mit BaSO₄ als Grundkörper mit einer Partikelgröße von <0,7 µm, stark lichtstreuend mit TiO₂ als Grundkörper oder lichtabsorbierend mit Rutilmischphasenpigmenten als Grundkörper. Darüber hinaus tritt an die Stelle der Festlegung auf eine einzige Partikelmorphologie, nämlich der des SnO₂, der Freiheitsgrad, auch andere Partikelformen, wie z. B. Nadeln oder Plättchen, unter Verwendung der erfindungsgemäßen Beschichtung mit elektrischer Leitfähigkeit auszustatten. Außerdem ergibt sich die Möglichkeit, bei Auswahl eines Grundkörpers sehr niedriger Dichte den erforderlichen gewichtsmäßigen Anteil an elektrisch leitfähigem Füllstoff, der in einer polymeren Matrix, z. B. in einem Lackfilm oder Kunststofformteil, zum Erreichen des gewünschten Effekts enthalten sein muß, herabzusetzen gegenüber mit Fluoridionen dotiertem grundkörperfreien SnO₂.

Zur Herstellung eines elektrisch leitfähigen Füllstoffes gemäß der vorliegenden Erfindung wird ein anorganischer Grundkörper mit einer sehr dünnen Beschichtung, bestehend aus mit Fluoridionen dotiertem Zinndioxid, umhüllt.

Dies geschieht erfindungsgemäß in der Weise, daß
a) der anorganische Grundkörper in Wasser dispergiert wird,
b) eine wässrige Lösung von Alkalihexahydroxostannat zugesetzt wird,
c) Säure bis zum Absinken des pH-Werts auf 6 bis 2 zugesetzt wird, wobei eine Abscheidung von wasserhaltigem SnO₂ auf der Oberfläche des anorganischen Grundkörpers erfolgt,
d) die Suspension weitergerührt wird, wobei ein Altern der oxidischen Beschichtung erfolgt,
e) der Feststoff durch Filtration abgetrennt wird und durch Waschen mit Wasser von löslichen Salzen befreit wird,
f) der Feststoff bei 300 bis 900°C thermisch behandelt wird,
g) der mit SnO₂ umhüllte anorganische Grundkörper mit Zinnfluorid innig vermengt wird,
h) das Gemisch in einem Ofen 0,5 bis 2 Std. bei einer Temperatur von 300 bis 600°C erhitzt wird.

Eine vorteilhafte Ausgestaltung der Erfindung ist, daß in Abwandlung der Verfahrensstufe b) Zinntetrachlorid und eine Lauge bis zum Ansteigen des pH-Wertes auf 6 bis 14 zugesetzt wird.

Eine vorteilhafte Ausgestaltung der Erfindung ist, daß die Abscheidung von SnO₂ auf der Oberfläche des anorganischen Grundkörpers in Abwandlung der Verfahrensstufen b) und c) durch Hydrolyse eines Zinnalkoholats erfolgt.

Der elektrisch leitfähige Füllstoff wird für elektrisch leitfähige Beschichtungen, elektrisch leitfähige Kunststoffe, elektrisch leitfähige Klebstoffe und elektrisch leitfähige Synthesefasern oder für elektrisch leitfähige Walzen in Kopiergeräten, Telefaxgeräten und Vervielfältigungsmaschinen oder als Ladungskontrolladditiv für Toner von Kopiergeräten verwendet.

Die Erfindung wird anhand der nachfolgenden Beispiele erläutert.

### Bespiel 1

100 g BaSO₄ mit einem mittleren Teilchendurchmesser von 0,2 µm und einer spezifischen Oberfläche von 15 m²/g wurden in 300 ml Wasser bei 25°C suspendiert. Dann erfolgte Zugabe zunächst von 50 g einer 50%igen wässrigen NaOH-Lösung und anschließend von 75,8 g Na₂[Sn(OH)₆], gelöst in 200 ml Wasser. Nach 10 minütigem Rühren zur homogenen Verteilung aller Komponenten in der Suspension wurde zur Abscheidung einer Zinndioxidhydrat-Schicht auf den BaSO₄-Partikeln mittels Zutropfen von verdünnter Schwefelsäure über einen Zeitraum von 2 h eine Absenkung des pH-Wertes auf pH 2,5 vorgenommen. Anschließend wurde die Suspension zur Reifung noch 3 h unter Rühren bei dem genannten pH-Wert gehalten. Danach wurde der Feststoff abfiltriert, mit Wasser nachgewaschen, im Trockenschrank getrocknet und bei 900°C in einem Muffelofen getempert. 50 g des so erhaltenen SnO₂-beschichteten BaSO₄ wurden mit 3,8 g SnF₂ innig gemischt und 1,5 h bei 300°C thermisch behandelt. Das blaßgelbe Endprodukt wies einen spezifischen Pulverwiderstand von 4,6 · 10² Ohm · cm auf.

### Beispiel 2

200 g BaSO₄ mit einem mittleren Teilchendurchmesser von 10 µm und einer spezifischen Oberfläche von <1 m²/g wurden in 1000 ml Wasser suspendiert. Nach Zugabe von 2 ml SnCl₄ sowie 1 ml konz. HCl stellte sich ein pH-Wert von 1,5 ein; in diesem Zustand wurde die Suspension noch 1 h bei 25°C gerührt. Dann wurde der pH-Wert durch Zugabe von 1000 ml einer 10%igen wässrigen NaOH-Lösung auf pH 14 eingestellt und die Suspension anschließend auf 70°C erwärmt. Im Verlauf von 1,5 h ließ man 16 ml SnCl₄, gelöst in 200 ml 2 M HCl, zutropfen, wobei der pH-Wert stets oberhalb von pH 11,5 gehalten wurde. Während weiterer 1,5 h erfolgte durch langsames Zutropfen von ca. 870 ml 2 M HCl eine pH-Absenkung auf pH 2,5. Bis einschließlich der nachfolgenden dreistündigen Reifung der aufgefällten Zinndioxidhydrat-Schicht wurde die Temperatur der Suspension auf 70°C gehalten. Nach Abkühlen auf etwa 25°C wurde der Feststoff abfiltriert, mit Wasser gewaschen, im Trockenschrank getrocknet und bei 900°C in einem Muffelofen getempert. Mischen von 50 g dieses Materials mit 1,3 g SnF₂ ergab nach 45-minütigem Tempern bei 300°C ein hellgelbes Pulver mit einem Pulverwiderstand von 6,2 · 10² Ohm · cm.

### Beispiel 3

100 g eines Titandioxidpigmentes wurden in 400 ml Wasser bei 70°C suspendiert. Nach Einstellen der Suspension mit Salzsäure auf pH 2 erfolgte Zugabe von 500 ml Wasser mit einer Temperatur von 70°C, 1 ml SnCl₄ sowie 1 ml konz. HCl. Die Suspension wurde bei dem sich dann einstellenden pH 1,5 noch während 60 min nachgerührt. Sodann wurden gleichzeitig 800 ml einer 10%igen wässrigen NaOH-Lösung und 31 ml SnCl₄ gelöst in 100 ml 2 M HCl, langsam während 1,5 h zugegeben und die Suspension noch weitere 30 min gerührt. Dabei wurde die Temperatur ebenso auf 70°C gehalten. Danach erfolgte eine pH-Senkung auf 2,5 durch Zugabe verdünnter HCl über einen Zeitraum von 90 min bei 70°C. Die anschließende Reifungszeit der Zinndioxidhydratabscheidung bei 70°C betrug 3 h. Anschließend wurde der Feststoff abfiltriert, nachgewaschen, im Trockenschrank getrocknet und dann bei 600°C in einem Muffelofen getempert. Nach Mischen von 50 g des Feststoffes mit 3,7 g SnF₂ und 45-minütigem thermischen Behandeln bei 350°C wurde ein Pulver erhalten, das einen spezifischen Pulverwiderstand von 8 · 10² Ohm · cm aufwies.

### Beispiel 4

100 g eines handelsüblichen Quarzes mit einer spezifischen Oberfläche von <1 m²/g und einem d₅₀-Wert der Partikelgrößenverteilung von etwa 15 µm wurden in 400 ml Wasser bei Raumtemperatur suspendiert. Durch Zugabe von 80 ml einer 25%igen wässrigen NaOH-Lösung wurde der pH-Wert auf pH 14 angehoben. Dann wurden 36,3 g Na₂[Sn(OH)₆], gelöst in 120 ml H₂O, zur Suspension unter Rühren in einem Schritt zugegeben. Nach weiterem Rühren von 10 min erfolgte durch Zutropfen von ca. 320 ml verdünnter Schwefelsäure über einen Zeitraum von 2 h eine langsame pH-Senkung von pH 14 auf pH 2,5. Zur Reifung der Zinndioxidhydratabscheidung auf den Quarzpartikeln hielt man die Suspension noch weitere 3 h unter Rühren bei 25°C. Dann wurde der Feststoff abfiltriert, gewaschen, im Trockenschrank getrocknet und bei 600°C in einem Muffelofen getempert. Mischen von 50 g dieses SnO₂-beschichteten Quarzes mit 2,1 g SnF₂ ergaben nach 1,5 h Verweilzeit bei 350°C ein hellgelbes Pulver, dessen spezifischer Pulverwiderstand 9 · 10² Ohm · cm betrug.

## Patentansprüche

1. Elektrisch leitfähiger Füllstoff, dadurch gekennzeichnet, daß ein anorganischer Grundkörper mit einer Schicht, die aus mit Fluoridionen dotiertem SnO₂ besteht, umhüllt ist.

2. Elektrisch leitfähiger Füllstoff nach Anspruch 1, dadurch gekennzeichnet, daß der anorganische Grundkörper BaSO₄ ist.

3. Elektrisch leitfähiger Füllstoff nach Anspruch 1, dadurch gekennzeichnet, daß der anorganische Grundkörper TiO₂ ist.

4. Elektrisch leitfähiger Füllstoff nach einem der Ansprüche 1 oder 3, dadurch gekennzeichnet, daß der anorganische Grundkörper ein Rutilmischphasenpigment aus Nickeltitangelb oder Chromtitangelb ist, oder daß der anorganische Grundkörper nadelförmig ist, bestehend aus Wollastonit, nadelförmigem TiO₂, nadelförmigem Alkalititanat, nadelförmigem CaCO₃, nadelförmigem SiO₂ oder Glasfasern.

5. Elektrisch leitfähiger Füllstoff nach einem der Ansprüche 1 bis 2, dadurch gekennzeichnet, daß der anorganische Grundkörper ein plättchenförmiges Partikel, bestehend aus Glimmer, Talkum, Kaolin, oder BaSO₄ ist.

6. Elektrisch leitfähiger Füllstoff nach einem der Ansprüche 1 bis 5, dadurch gekennzeichnet, daß die Schicht aus mit Fluoridionen dotiertem SnO₂ eine Stärke von 10 - 30 nm aufweist.

7. Elektrisch leitfähiger Füllstoff nach einem der Ansprüche 1 bis 6, dadurch gekennzeichnet, daß die Schicht aus mit Fluoridionen dotiertem SnO₂ eine Stärke von 10 - 15 nm aufweist.

8. Elektrisch leitfähiger Füllstoff nach einem der Ansprüche 1 bis 7, dadurch gekennzeichnet, daß die mit Fluoridionen dotierte SnO₂-Schicht aus zusammenhängenden mit Fluorid dotierten SnO₂-Kristalliten mit Kristallitgrößen von 2 - 10 nm aufgebaut ist.

9. Elektrisch leitfähiger Füllstoff nach einem der Ansprüche 1 bis 8, dadurch gekennzeichnet, daß die Schicht aus mit Fluoridionen dotiertem SnO₂ transparent ist.

10. Elektrisch leitfähiger Füllstoff nach einem der Ansprüche 1 bis 9, dadurch gekennzeichnet, daß die Schicht aus mit Fluoridionen dotiertem SnO₂ einen Fluoridgehalt von 1 bis 10 Gew.-%, bezogen auf die SnO₂-Schicht, hat.

11. Elektrisch leitfähiger Füllstoff nach einem der Ansprüche 1 bis 10, dadurch gekennzeichnet, daß die Schicht aus mit Fluoridionen dotiertem SnO₂ einen Fluoridgehalt von 2 bis 4 Gew.-%, bezogen auf die SnO₂-Schicht, hat.

12. Verfahren zur Herstellung eines elektrisch leitfähigen Füllstoffs nach einem der Ansprüche 1 bis 11, dadurch gekennzeichnet, daß
a) der anorganische Grundkörper in Wasser dispergiert wird,
b) eine wässrige Lösung von Alkalihexahydroxostannat zugesetzt wird,
c) Säure bis zum Absinken des pH-Werts auf 6 bis 2 zugesetzt wird, wobei eine Abscheidung von wasserhaltigem SnO₂ auf der Oberfläche des anorganischen Grundkörpers erfolgt,
d) die Suspension weitergerührt wird, wobei ein Altern der oxidischen Beschichtung erfolgt,
e) der Feststoff durch Filtration abgetrennt wird und durch Waschen mit Wasser von löslichen Salzen befreit wird,
f) der Feststoff bei 300 bis 900°C thermisch behandelt wird,
g) der mit SnO₂ umhüllte anorganische Grundkörper mit Zinnfluorid innig vermengt wird,
h) das Gemisch in einem Ofen 0,5 bis 2 Std. bei einer Temperatur von 300 bis 600°C erhitzt wird.

13. Verfahren nach Anspruch 12, bei dem in Abwandlung der Verfahrensstufe b) Zinntetrachlorid und eine Lauge bis zum Ansteigen des pH-Wertes auf 6 bis 14 zugesetzt werden.

14. Verfahren nach Anspruch 12, bei dem die Abscheidung von SnO₂ auf der Oberfläche des anorganischen Grundkörpers in Abwandlung der Verfahrensstufen b) und c) durch Hydrolyse eines Zinnalkoholats erfolgt.

15. Verwendung eines elektrisch leitfähigen Füllstoffs nach einem der Ansprüche 1 bis 11 für elektrisch leitfähige Beschichtungen, elektrisch leitfähige Kunststoffe, elektrisch leitfähige Klebstoffe oder elektrisch leitfähige Synthesefasern.

16. Verwendung eines elektrisch leitfähigen Füllstoffs nach einem der Ansprüche 1 bis 11 für elektrisch leitfähige Walzen in Kopiergeräten, Telefaxgeräten und Vervielfältigungsmaschinen.

17. Verwendung eines elektrisch leitfähigen Füllstoffs nach einem der Ansprüche 1 bis 11 als Ladungskontrolladditiv für Toner von Kopiergeräten.
